Europäisches Patentamt

**European Patent Office**

**Office européen des brevets**

(11) Veröffentlichungsnummer: **0 355 317**
**A2**

# EUROPÄISCHE PATENTANMELDUNG

(21) Anmeldenummer: 89111554.5

(51) Int. Cl.⁴: **B01D 53/34**

(22) Anmeldetag: 24.06.89

(30) Priorität: 07.07.88 DE 3822943
15.06.89 DE 3919512

(43) Veröffentlichungstag der Anmeldung:
28.02.90 Patentblatt 90/09

(84) Benannte Vertragsstaaten:
AT BE CH DE ES FR GB GR IT LI LU NL SE

(71) Anmelder: **PFLEIDERER INDUSTRIE GMBH & CO. KG**
**Ingolstädter Strasse 51**
**D-8430 Neumarkt(DE)**

(72) Erfinder: **Vaget, Herbert Stefan**
**Oberes Griesfeld 50**
**D-8170 Griesfeld 50(DE)**

(74) Vertreter: **Czowalla . Matschkur Patentanwälte**
**Dr.-Kurt-Schumacher-Strasse 23 Postfach 9109**
**D-8500 Nürnberg 11(DE)**

(54) **Verfahren und Vorrichtung zum Reinigen von Trocknerabluft.**

(57) Verfahren zum Reinigen der vornehmlich mit Terpenen belasteten Abluft des Trockners bei der Verarbeitung von Holzspänen und Holzfurnieren und anderer aerosolhaltiger Abluftströme, wobei der Abluftstrom durch Kühlung gesättigt, darauf mit Kondensationskeimen versetzt und die sich bildenden Tropfen ausgewaschen und abgeschieden werden.

FIG. 1

EP 0 355 317 A2

## Verfahren und Vorrichtung zum Reinigen von Trocknerabluft

Die Erfindung richtet sich auf ein Verfahren zum Reinigen der vornehmlich mit Terpenen belasteten Abluft der Trockner bei der Verarbeitung von Holzspänen und Holzfurnieren sowie anderer aerosolhaltiger Abluftströme.

In der holzverarbeitenden Industrie, vornehmlich bei der Herstellung von Spanplatten und Tischlerplatten, werden bevorzugt Nadelhölzer verarbeitet, die beachtliche Mengen an Terpenen bzw. Terpen-Kohlenwasserstoffen aufweisen und zwar um so mehr, je geringer das Alter des Holzes ist. Unter Terpenverbindungen faßt man Kohlenwasserstoffe zusammen, die im allgemeinen 10 C-Atome und darüber, aber nur geringe O-Bestandteile, insbes. als OH-Gruppen aufweisen. Charakteristisch ist den Terpenen ihr Geruch, weshalb sie in der Abluft von Trockneranlagen besonders störend empfunden werden. In der Abluft liegen diese Stoffe in feinster Form vor, insbes. als Aerosole. Meist liegen die Holzinhaltstoffe in flüssiger Form vor und bilden dann in der Abluaft Nebel. Diese enthalten aber auch dispergierte Feststoffe als Stäube. Im allgemeinen sind diese Aerosole stark hydrophob. Sie widersetzen sich infolgedessen weitgehend der Abscheidung durch herkömmliche Filter und Waschvorrichtungen. Unter dem Eindruck eines noch immer zunehmenden Umweltbewußtseins kommt der Reinigung der Abluft aus der Holzverarbeitung jedoch eine immer stärkere Bedeutung zu. Eine thermische Nachbrennung der Abluft oder auch eine katalytische Reinigung ist außerordentlich teuer. Die Verwendung von Venturiwäschern verbietet sich deshalb, weil die störenden Abluftanteile die Eigenschaften kolloider Systeme aufweisen und Venturiwäscher bei aerosolhaltigen Abluftströmen einen niedrigen Wirkungsgrad bei sehr hohem Energiebedarf haben. Mit Aktivkohle betriebene Filter sind wegen der vergleichsweisen hohen Temperatur der Abluft ungeeignet. Es bereitet infolgedessen außerordentliche Schwierigkeiten, eine maximale Belastung mit 150 mg/m³ einzuhalten. Aus dieser Problematik und der Forderung nach wirksamer Entlastung der Umwelt von störenden Industrieabfällen resultiert die Aufgabe, ein Verfahren zu finden, welches es in technisch einfacher und wirtschaftlich akzeptabler Weise gestattet, die Trocknerabluft bei der Holzverarbeitung von den ihr anhaftenden Holzinhaltstoffen wirksam zu befreien, wobei es sich vornehmlich, jedoch nicht ausschließlich, um Terpen-Kohlenwasserstoffe handelt, andererseits aber auch um Stäube, die gleichenfalls bevorzugt in Form feinster Teilchen vorliegen.

Erfindungsgemäß hat sich ein Verfahren als überraschend wirksam zur Reinigung der Trocknerabluft erwiesen, bei welchem diese zunächst durch Kühlung gesättigt, darauf mit Kondensationsmittel versetzt wird, worauf die sich bildenden Tropfen ausgewaschen und abgeschieden werden. Dieser Verfahrensweise liegt zunächst die Erkenntnis zugrunde, daß eine Sättigung der Abluft besonders günstige Voraussetzungen für die Abscheidung selbst feinster, aerosolartig vorliegender Fremdstoffe aus der Trocknerabluft geschaffen werden. Die der gesättigten Luft zugesetzten Kondensationsmittel wirken als Keime, die zu einer rapiden Tropfenbildung innerhalb der strömenden Abluft führen. Dadurch entstehen Teilchen in einer Größe, die problemlos ausgewaschen und abgeschieden werden können. Das bei diesem Verfahren anfallende Kondensat wird dann aufgearbeitet und entsorgt. Eine Abluft, die bei Eintritt in das Verfahren einen Gehalt in der Größenordnung von 100 mg/m³ aufweist, kann auf diese Weise bis auf einen Wert von ca. 3 mg/m³ gereinigt werden, was verständlicherweise eine außerordentlich hohe Effizienz dieses Verfahrens zur Folge hat.

In weiterer Ausgestaltung dieses allgemeinen Gedankens wird in die gesättigte Abluft eine Flüssigkeit in feinster Partikelgröße als Kondensationskeime eingebracht. Die mikrofeinen Flüssigkeitspartikel führen unmittelbar zu einer intensiven Tropfenbildung, die Grundlage für eine wirksame Ausscheidung der belastenden Stoffe ist. Als besonders vorteilhaft hat es sich erwiesen, solche Flüssigkeiten zu wählen, die sich nicht nur leicht verdüsen, also in feinste Partikelform überführen lassen, sondern die außerdem einen Lösungseffekt auf die Terpenkohlenwasserstoffe ausüben. Die Verfahrenskosten lassen sich dadurch in vertretbaren Grenzen halten, wobei, wie die Erfindung weiter vorsieht, Laugen, wie NaOH als Kondensationsmittel eingebracht werden. Diese lassen sich außerdem verhältnismäßig unproblematisch entsorgen, so daß das Verfahren seinerseits als besonders umweltfreundlich angesehen werden kann.

Da die in der Trockenabluft enthaltenen Aerosole ausgeprägte hydrophobe Eigenschaften aufweisen, geht das Bestreben dahin, der zu reinigenden Abluft Hydrophilierungsmittel zuzusetzen. Dies wiederum schafft die Voraussetzung für die lösende Wirkung der Kondensationsmittel gegenüber den auszuscheidenden Holzinhaltstoffen. Als zweckmäßig hat es sich darüber hinaus erwiesen, Tenside, höhere Alkohole, Fettalkohole und/oder auch alkalische Reiniger als Sprühmittelzusätze zu verwenden, da diese die tropfenbildende und löslichkeitsfördernde Wirkung der Kondensationsmittel in beachtlichem Maße unterstützen.

Die Erfindung befaßt sich darüber hinaus mit einer das soeben erörterte Verfahren realisierenden Vorrichtung. Diese besteht aus einem Waschbehälter mit Sprühdüsen für das Kondensationsmittel an der Einströmseite und einem Tropfenabscheider vor der Ausströmseite, was maßgeblich dazu beiträgt, den apparativen Aufwand des Verfahrens verhältnismäßig gering zu halten. Der Wäscher kann fast beliebiger Art sein. Es kommen Gegenstromverfahren, Kreuzstrom-oder Gleichstromverfahren in Betracht. Der zu reinigende Abluftstrom kann horizontal wie auch vertikal geführt werden. Der Abscheider besteht im allgemeinen aus entsprechenden Einbauten oder Füllkörpern in dem Waschbehälter.

Wie bereits oben ausgeführt, besteht das erfindungsgemäße Verfahren darin, daß der Abluftstrom zunächst durch Kühlung gesättigt, darauf mit Kondensationskeimen versetzt wird, worauf die sich bildenden Kondensate ausgewaschen und abgeschieden werden. Im allgemeinen kommen als Kondensationsmittel wegen ihrer terpenlösenden Eigenschaften Laugen in Betracht, die wiederum mit sauren Chemikalien neutralisiert werden müssen. Infolgedessen ist dieses an sich besonders brauchbare Verfahren zum Reinigen der Trocknerabluft mit einem erheblichen Verbrauch an Chemikalien belastet. Dies erhöht nicht nur die Kosten des Verfahrens, sondern bereitet auch bei der Entsorgung der Verfahrensabgänge erhebliche Schwierigkeiten, nachdem der Umweltverträglichkeit solcher Vorgänge eine immer größere Beachtung geschenkt werden muß. Es ist deshalb nach Mitteln und Wegen zu suchen, das Verfahren nach den obigen Ausführungen zu verbessern, und zwar insbesondere durch eine wirksame Verminderung der einzusetzenden Chemikalien. Da die zu reinigenden Ab luftströme, vorzugsweise diejenigen von direkt beheizten Trocknern, auch im Rauchgas, beachtliche Anteile an Säureresten enthalten, bietet sich hier ein Verfahren an, diese sauren Anteile aus den zu reinigenden Abluftströmen zunächst zu gewinnen, um sie dann an der gewünschten Stelle wieder in das Verfahren einzuführen. Hierzu sieht die Erfindung bei einem Verfahren der eingangs bezeichneten Art, insbesondere einem solchen nach dem Hauptpatent vor, daß der Abluftstrom vor der Kondensation ausgewaschen und das hierbei anfallende saure Waschwasser zum Ausfällen der im weiteren Verfahren gewonnenen alkalischen Kondensate verwendet wird. Die mit der zu reinigenden Abluft in das Verfahren eingetragenen Säurereste, nämlich vorzugsweise HCL, SO2,NO$_x$, Co2, führen zu einer starken Ansäuerung des Waschwassers. Dieses kann gewonnen und dann im weiteren Verlauf des Reinigungsverfahrens zur Neutralisierung der mehr oder weniger stark alkalisch anfallenden Kondensate verwendet werden. Dadurch lassen sich unter besonders günstigen Bedingungen bis über die Hälfte der andernfalls hierzu erforderlichen sauren Chemikalien einsparen. Daß diese Maßnahme nicht nur kostenmäßig, sondern vor allem auch hinsichtlich einer aufwendigen Entsorgung besonders vorteilhaft ins Gewicht fällt, liegt auf der Hand. Zweckmäßig wird ein Teil des anfallenden sauren Waschwassers zum Ausfällen verwendet, ein anderer Teil hingegen im Kreislauf dem Waschvorgang wieder zugeführt. Ggf. erfolgt hier ein Zusatz an Frischwasser.

Wird aber bereits in einem Verfahrensbereich das Wasser im Kreislauf geführt, so bietet es sich an, diesem Gedanken weiter Rechnung zu tragen. Dies geschieht erfindungsgemäß in der Weise, daß ein Teil des beim Auswaschen anfallenden alkalischen Kondensats im Kreislauf der Kondensatgewinnung wieder zugeführt wird. Hierzu bietet sich zunächst die Verwendung des unmittelbar aus dem Waschprozeß austretenden und am Boden des Waschbehälters gesammelten Kondensats an. Das erfindungsgemäße Verfahren eröffnet jedoch eine weitere Möglichkeit dadurch, daß das gesammelte alkalische Konzentrat durch Neutralisation ausgefällt, von der Klarphase getrennt und diese nach zusatz von Alkalien der Kondensatgewinnung wieder zugeführt wird. Auch hierdurch wird vermieden, daß namhafte Abgänge aus dem Verfahren ausgeschieden werden müssen, die wiederum das Problem ihrer Entsorgung aufwerfen. Die Erfindung ist insofern besonders geeignet, zu einem praktisch vollkommen oder zumindest weitgehend geschlossenen Verfahrensablauf beim Reinigen der vornehmlich mit Terpenen und weiteren schwer zu entfernenden Schadstoffen beladenen Abluftströme bei Trocknern in der Holzverarbeitung zu führen.

Es liegt im Rahmen der soeben erörterten, weiteren Ausbildung der Erfindung, daß sich diese auch auf eine zu ihrer Realisierung geeignete Vorrichtung erstreckt. Diese besteht darin, daß dem Waschbehälter ein den Abluftstrom führender sogenannter Quenchbehälter mit Sprühdüsen zum Zuführen des Waschwassers vorgeschaltet ist. Dieser wird von dem Abluftstrom mit hoher Geschwindigkeit durchströmt und führt diesen in den Waschbehälter ein, welcher Ausgestaltung dieser immer sein mag. Der Schmutzstoffanteil wird hier aus dem Verfahren ausgeschieden.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:

Fig. 1 ein weitgehend vereinfachtes Verfahrensschema nach der Erfindung,

Fig. 2 eine abgewandelte Ausführungsform des Waschbehälters, und

Fig. 3 eine weitere Ausbildung des erfindungsgemäßen Verfahrensschemas.

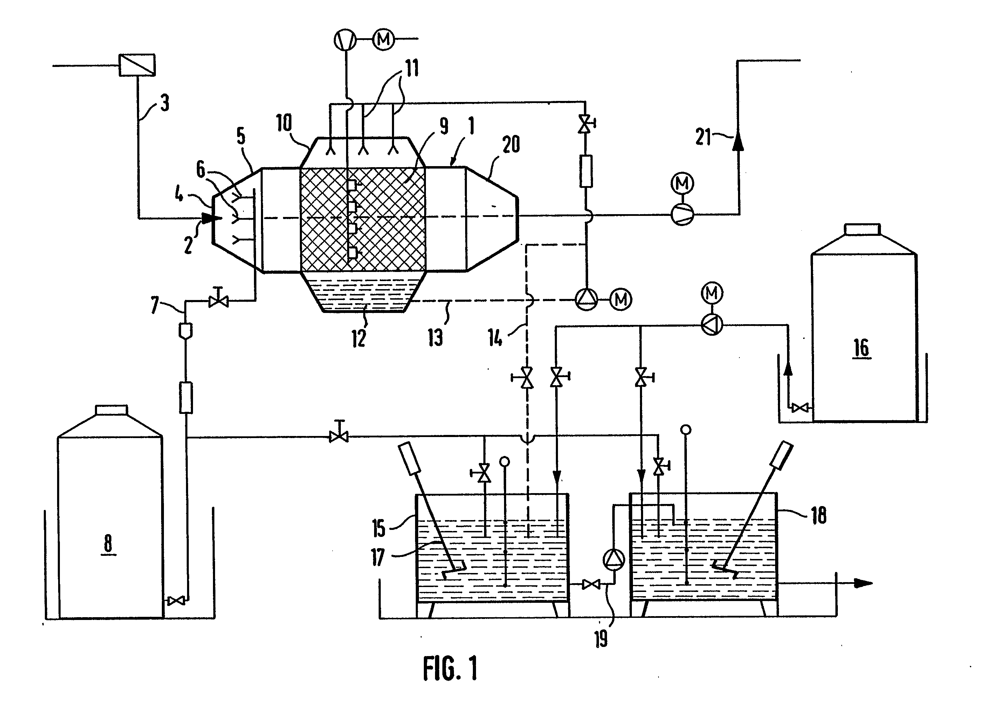

Wesentlicher Bestandteil der Vorrichtung ist der Waschbehälter 1, der bei der Ausführungsform nach Fig. 1 den Abluftstrom 2 horizontal führt. Dieser wird durch die Leitung 3 zugeführt und gelangt durch die Eintrittsöffnung 4 in den Waschbehälter 1. In dem sich konisch erweiternden Einströmteil 5 wird die Luft intensiv durchwirbelt. Hier sind Düsen 6 über den Strömungsquerschnitt verteilt, welche das Kondensationsmittel in feinster Partikelgröße in den Luftstrom einbringen. Die Zuführleitung 7 für das Kondensationsmittel, z. B. NaOH, ist unter Zwischenschaltung entsprechender Ventile, Schieber u. dgl. mit dem Vorratsbehälter 8 verbunden. Das an der Einströmseite der Abluft zugesetzte Kondensationsmittel bewirkt in diesem Bereich des Waschbehälters bereits eine intensive Tropfenbildung, die von den als Kondensationskeime wirkenden Partikeln der eingebrachten Flüssigkeit ausgeht. Die Luftströmung verlangsamt sich durch die Querschnitterweiterung des Waschbehälters 1, und die Luft gelangt in den Tropfenabscheider 9, der in üblicher Weise mit Einbauten konventioneller Art versehen ist. In diesem Bereich ist der Waschbehälter 1 mit einem Aufsatz 10 versehen, in welchem, über den Querschnitt verteilt, Düsen 11 angeordnet sind. Unterhalb des Abscheiders 9 ist ein Sammeltrog 12 angebracht, in welchem sich das Kondensat sammelt. Dieser Trog 12 ist über eine Leitung 13 zunächst mit den Düsen 11 verbunden, so daß ggf. Kondensat im Querstrom zu dem Abluftstrom in den Abscheider 9 eingeleitet werden kann. Ggf. können die Düsen 11 aber auch zum Einleiten von Sprühmittelzusätzen dienen, die vornehmlich zur Hydrophilierung der auszuscheidenden Holzinhaltstoffe dienen. Die Rohrleitung 14 führt in einen Sammelbehälter 15 für das Kondensat, das bei Verwendung eines alkalischen Kondensationsmittels (z. B. NaOH) mittels eines sauren Reagenz, beispielsweise HCl aus dem Vorratsbehälter 16 in dem Sammelbehälter 15 neutralisiert werden kann. Durch entsprechende Sensoren läßt sich der Zusatz der einzelnen Reagenzien weitgehend automatisch steuern. Ein Rührwerk 17 bewirkt eine einwandfreie Durchmischung des Inhalts des Sammelbehälters 15. An diesen schließt sich ggf. ein weiterer Behälter 18 zur Aufarbeitung und/oder Entsorgung des gewonnenen Kondensats an. Beide Behälter 15 und 18 sind durch eine Rohrleitung miteinander verbunden.

Das Ausströmende 20 des Waschbehälters 1 verjüngt sich und mündet in die Rohrleitung 21, durch die die gereinigte Abluft das Verfahren verläßt.

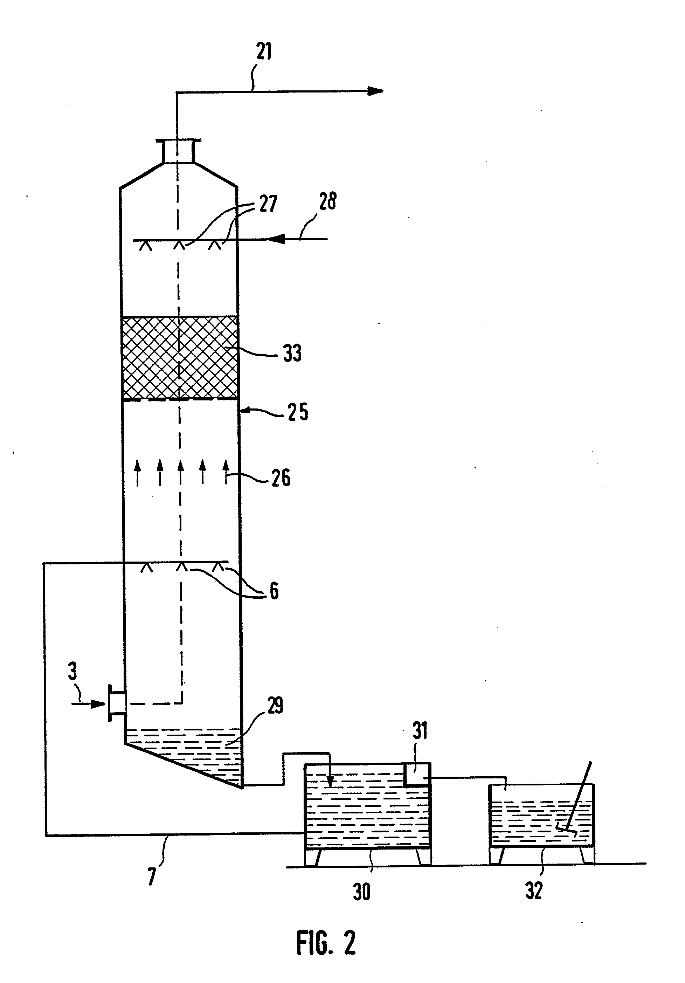

Während das Verfahrensschema nach Fig. 1 von einem quer geführten Abluftstrom ausgeht, zeigt die Fig. 2 einen vertikal stehenden Waschbehälter 25 mit der Zuleitung 3 für die zu reinigende und der Ableitung 21 für die gereinigte Abluft. Der in dem Waschbehälter 25 eingeleitete Abluftsstrom trifft auf die Düsen 6, welche das durch die Leitung 7 zugeführte Kondensationsmittel in feinster Form über den gesamten Querschnitt weitgehend gleichmäßig verteilen, so daß die Partikel in gewünschter Weise als Kondensationskeime wirken können. Der in Pfeilrichtung 26 aufwärts geführte Luftstrom durchsetzt den Füllkörperabschnitt 33 innerhalb des Waschbehälters 25 und passiert dann die Düsen 27, die an eine Leitung 28 zur Zuführung von Sprühmittelzusätzen, Reinigungsmittel od. dgl. angeschlossen sind. Bei dieser Ausführungsform wird das Kondensat in dem Sumpf 29 gesammelt und von dort in den Behälter 30 geleitet, der wiederum an die Kondensmittelleitung 7 angeschlossen ist, so daß sich ein entsprechender Umlauf ergibt. Über einen Überlauf 31 ist dieser Behälter 30 an einen weiteren Behälter 32 angeschlossen, in welchem etwa die Entsorgung der Waschflüssigkeit oder auch die Sprühmitteltrennung erfolgt.

Bei beiden Vorrichtungen gemäß Fig. 1 bzw. 2 ist dem Waschbehälter 1 bzw. 25 eine der Sättigung des Luftstroms 2 dienende Kühlung vorgeschaltet, die, als solche an sich bekannt, im einzelnen nicht wiedergegeben ist.

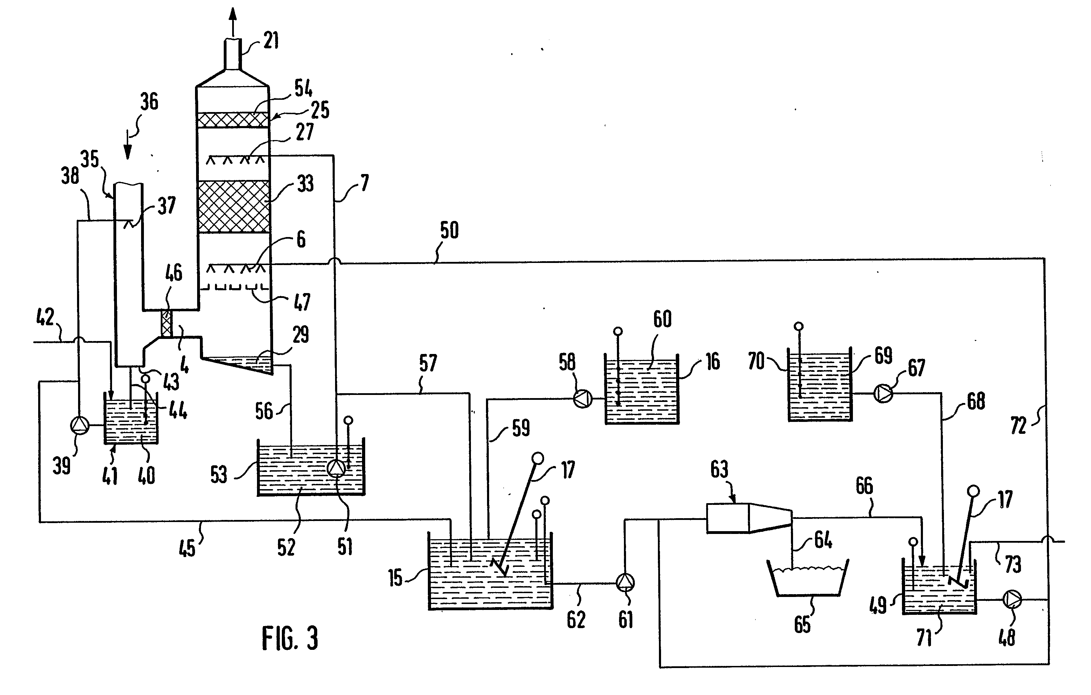

Gemäß Fig. 3 wird dem Waschbehälter 25 wird durch die Eintrittsöffnung 4 der Abluftstrom zugeführt, und er verläßt den Waschbehälter 25 durch die Austrittsöffnung 21. Der Eintrittsöffnung 4 ist ein sogenannter Quenchbehälter 35 unmittelbar vorgeschaltet, dieser kann beispielsweise eine Zylinderform aufweisen. Der Abluftstrom 36 fällt in den Behälter 35 ein, durchströmt ihn mit vergleichsweise hoher Geschwindigkeit etwa beispielsweise 12 m/s und gelangt dann durch den Anschluß 4 in den eigentlichen Waschbehälter. Im oberen Teil des Quenchbehälters sind Sprühdüsen 37 vorgesehen, die an eine Leitung 38 mit einer Pumpe 39 angeschlossen ist, die das Waschwasser 40 aus dem Behälter 41 zuführt. In den Behälter 41 mündet außerdem eine Frischwasserleitung 42 ein. Der Boden 43 des Quenchbehälters 35 sammelt das anfallende Quenchwasser und führt es über eine Leitung 44 dem Sammelbehälter 40 zu. Ein Teil des von der Pumpe 39 geförderten sauren Quenchwassers aus dem Quenchbehälter 35 gelangt über die leitung 45 in den Sammelbehälter 15. Das Waschwasser 40 ist weitgehend mit in dem Abluftstrom 36 enthaltenen Säureresten belastet.

In der Verbindung 4 zwischen Quenchbehälter 35 und Waschbehälter 25 befindet sich bei der in der Zeichnung wiedergegebenen Ausführungsform ein Tropfenabscheider 46, so daß das saure Überschuß-Quenchwasser weitgehend in dem Behälter 35 zurückbleibt. Durch Einbauten 47 im Eintrittsbereich des Waschbehälters 25 wird die Luft intensiv durchwirbelt. Sie gelangt dann in den Einwirkungsbereich des aus den Düsen 6 ausströmenden Kondensationsmittels, welches durch die Pumpe 48 aus dem Behälter 49 entnommen und über die Leitung 50 herangeführt wird. Hierdurch wird eine intensive Tropfenbildung innerhalb des Waschbehälters 25 bewirkt, die von den als Kondensationskeime wirkenden Partikeln der durch die Düsen 6 verströmten Flüssigkeit ausgeht. Der aufwärts gerichtete Luftstrom in dem Waschbehälter 25 gelangt dann in ein Füllkörperpaket 33, das in üblicher Weise mit Einbauten der verschiedensten konventionellen Art versehen ist. Darüber befinden sich nochmals Düsen 27, die über eine Leitung 7 mit der Tauchpumpe 51 verbunden sind und das Kondensationsmittel 52 aus dem Behälter 53 zuführen. Vor der Austrittsöffnung 21 ist ein Tropfenabscheider 54 innerhalb des Waschbehälters 25 vorgesehen.

Der Sumpf 29 am Boden des Waschbehälters steht über die Leitung 56 mit dem Sammelbehälter 53 für das im Waschbehälter 25 gewonnene Kondensat 52 in Verbindung. Während ein Teil des Förderstroms der Pumpe 51 im Kreislauf dem Waschbehälter 25 über die Düsen 27 wieder zugeführt wird, gelangt ein weiterer Teilstrom über die Rohrleitung 57 in den Sammelbehälter 15, in den außerdem die mit einer Förderpumpe 58 versehene Zuführleitung 59 für ein im Vorratsbehälter 16 befindliches saures Neutralisierungsmittel 60. Die Neutralisierung innerhalb des Sammelbehälters 15 führt zum Ausfällen des Kondensats, wobei ein Rührwerk 17 eine intensive Durchmischung des Inhalts des Sammelbehälters 15 bewirkt. Das hierdurch gebildete Schmutzwasser, welches auch die ausgefällte Phase enthält, gelangt mittels der Pumpe 61 durch die Verbindungsleitung 62 in die Dekantiereinrichtung 63, die die Trennung der Klarphase von den Schmutz- und Feststoffen bewirkt. Diese werden bei 64 aus der Dekantiereinrichtung 63 ausgetragen und von dem Trog 65 aufgenommen. Die Rohrleitung 66 führt die Klarphase aus der Dekantiereinrichtung 63 in den Sammelbehälter 49, wo sie über die Pumpe 67 und die Rohrleitung 68 mit einem alkalischen Kondensationsmittel 69 aus dem Vorratsbehälter 70 versetzt und du durch ein Rührwerk 17 mit diesem innig vermischt wird. Das Kondensationsmittel 71 wird über die Pumpe 48 und die Förderleitung 72 dem Waschbehälter 25 zugeführt und darin aus den Düsen 6 verströmt. Der Behälter 71 weist zusätzlich eine Frischwasserzuführung 73 auf.

## Ansprüche

1. Verfahren zum Reinigen der vornehmlich mit Terpenen belasteten Abluft des Trockners bei der Verarbeitung von Holzspänen und Holzfurnieren und anderer aerosolhaltiger Abluftströme, dadurch gekennzeichnet, daß der Abluftstrom (2) durch Kühlung gesättigt, darauf mit Kondensationskeimen versetzt und die sich bildenden Tropfen ausgewaschen und abgeschieden werden.

2. Verfahren nach Anspruch 1, dadurch gekennzeichnet, daß in die gesättigte Abluft eine Flüssigkeit in feinster Partikelgröße als Kondensationsmittel eingebracht wird.

3. Verfahren nach Anspruch 1 oder 2, dadurch gekennzeichnet, daß als Kondensationsmittel terpenlösende Flüssigkeiten eingebracht werden.

4. Verfahren nach einem der Ansprüche 1 bis 3, dadurch gekennzeichnet, daß fein verteilte Laugen, wie NaOH, als Kondensationsmittel eingebracht werden.

5. Verfahren nach einem der Ansprüche 1 bis 4, dadurch gekennzeichnet, daß der gesättigten Abluft Hydrophilierungsmittel zugesetzt werden.

6. Verfahren nach einem der Ansprüche 1 bis 5, dadurch gekennzeichnet, daß der gesättigten Abluft höhere Alkohole, Fettalkohole, Tenside, alkolische Reiniger od. dgl. zugesetzt werden.

7. Verfahren nach einem der Ansprüche 1 bis 6, wobei das sich bildende Kondensat mittels Alkalien ausgewaschen wird, dadurch gekennzeichnet, daß der Abluftstrom (36) vor der Kondensation ausgewaschen und das saure Waschwasser (40) zum Ausfällen des alkalischen Kondensats (52) verwendet wird.

8. Verfahren nach Anspruch 7, dadurch gekennzeichnet, daß zumindest ein Teil des Waschwassers (40) dem Waschvorgang im Kreislauf wieder zugeführt wird.

9. Verfahren nach Anspruch 7, dadurch gekennzeichnet, daß ein Teil des alkalischen Kondensats (52) im Kreislauf der Kondensatgewinnung wieder zugeführt wird.

10. Verfahren nach einem oder mehreren der Ansprüche 7 bis 9, dadurch gekennzeichnet, daß das gesammelte alkalische Kondensat (52) durch Neutralisation ausgefällt, von der Klarphase getrennt und diese nach Zusatz von Alkalien der Kondensatgewinnung wieder zugeführt wird.

11. Verfahren nach einem oder mehreren der Ansprüche 7 bis 10, dadurch gekennzeichnet, daß dem Ausfällen des Kondensats (52) eine Dekantierung nachgeschaltet wird.

12. Vorrichtung zur Durchführung des Verfahrens nach wenigstens einem der Ansprüche 1 bis 6, gekennzeichnet durch einen Waschbehälteer (1, 25) mit Sprühdüse (6) für das Kondensationsmittel an der Einströmseite und einem Tropfenabscheider (9, 33) vor der Ausströmseite.

13. Vorrichtung zur Durchführung des Verfahrens nach wenigstens einem der Ansprüche 7 bis 14 mit einem Waschbehälter zur Kondensatgewinnung, dadurch gekennzeichnet, daß dem Waschbehälter (25) ein den Abluftstrom (36) führender Quenchbehälter (35) mit Sprühdüsen (37) zum Zuführen des Waschwassers (40) vorgeschaltet ist.

14. Vorrichtung zur Durchführung des Verfahrens nach einem der Ansprüche 7 bis 11, dadurch gekennzeichnet, daß dem Behälter (15) zum Ausfällen des gewonnenen Kondensats eine Dekakntiereinrichtung (63) nachgeschaltet ist.

FIG. 1

FIG. 2

FIG. 3

EP 0 355 317 A2